# EUROPEAN PATENT APPLICATION

(11) **EP 0 729 926 A1**
(43) Date of publication of application: **04.09.1996**
(21) Application number: 96200541.9
(22) Date of filing: 01.03.1996
(51) Int. Cl.: C04B 28/14, E04C 2/04

(54) **Process for producing gypsum building elements and gypsum building elements produced by said process**

(30) Priority: 03.03.1995 BE 9500189
(71) Applicant: GYPROC BENELUX, B-2110 Wijnegem (BE)
(72) Inventor: Van Oyen, Paul, B-1982 Elewijt (BE); Scheepbouwer, Johannes, NL-7471 BD Goor (NL)
(74) Representative: Bairiot-Delcoux, Mariette

(57) **Abstract**

The invention relates to a process for producing building elements (1) made of gypsum, which comprises the following steps: preparing a mixture containing a quantity of gypsum particles and a quantity of free water; feeding said mixture to a compression mould; compressing the mixture in the compression mould at a final pressure of between 20 and 60 MPa, a compressed mass being obtained in the process; and unmoulding the compressed mass, characterized in that: the quantity of free water in the mixture is essentially uniformly distributed and amounts to from 1 to 8% by weight, based on the dry solids of the mixture, and in that the step of the compressed mass being unmoulded is followed by the step of the compressed mass being allowed to set. The invention also relates to a building element consisting of compressed gypsum, fabricated by means of said process.

## Description

The present invention relates to a process for producing gypsum building elements and to gypsum building elements thus obtained.

In the field of building elements there exist many gypsum products such as gypsum boards, tiles, ornamental mouldings, blocks which may or may not be hollow, and the like. They are employed, inter alia, in non-load-bearing walls, partitions, acoustic and/or fire-resisting walls and ceilings, raised floors and other modular systems.

The technical terminology in the context of industrial applications of plaster and gypsum is very extensive. In addition, designations from other languages are adopted. Often the precise meaning of the designation cannot be derived unambiguously from the word. More in particular, the terms "plaster" and "gypsum" (or their respective translations) are used in an often inconsistent manner. In order to avoid, within the scope of the present invention, any confusion in the field of terminology, the following definitions are adhered to hereinafter in the present text. Gypsum: calcium sulphate dihydrate (CaSO₄.2H₂O), existing in the form of natural gypsum or as an industrial by-product. Gypsum is also obtained by hydration of plaster or anhydrite.

Plaster: calcium sulphate hemihydrate (CaSO₄.½H₂O), obtained by dehydration (calcination) of gypsum.

Depending on their origin a distinction is drawn, within the scope of the present text, between natural gypsum, waste gypsum and industry gypsum.

The designation natural gypsum relates to the mineral which occurs as such in nature and of which, scattered over the world, various large deposits are known.

In the context of the present text, waste gypsum refers to: gypsum which exists in the form of production waste from the gypsum industry or as gypsum-containing building waste and demolition waste such as, for example, stucco, gypsum blocks, gypsum tiles and gypsum boards, including gypsum wallboard and gypsum fibreboard, said waste gypsum having been produced, in an earlier industrial process, by hydration of plaster, or of anhydrite.

The designation "industry gypsum" relates, within the scope of the present text, to types of gypsum obtained as a by-product of industrial activities, with the exception of the activities pertaining to the gypsum industry. Considerable amounts of industry gypsum are produced as a by-product in various chemical production processes and also in the course of cleaning flue gases and treating waste water containing sulphuric acid. Additionally, depending on their origin, various types of industry gypsum are distinguished. Thus flue gas desulphurization gypsum, also referred to as FGD gypsum or desulphogypsum, is formed during the desulphurization of flue gases with the aid of CaO, Ca(OH)₂ or CaCO₃. Phosphogypsum is obtained during production of phosphoric acid by the wet method. Other types of industry gypsum are, inter alia, nitrogypsum, salt gypsum, zinc gypsum, PAC (polyaluminium chloride) gypsum, dairy gypsum, titanium gypsum, lactic acid gypsum, citric acid gypsum, tartaric acid gypsum, oxalic acid gypsum and boric acid gypsum.

Latterly, much use has been made of industry gypsum as a base material for the plaster industry.

The use of types of industry gypsum as a base material for the production of plaster on an industrial scale is not without its problems.

Since industry gypsum is obtained as a by-product of industrial production or purification processes, the supply of industry gypsum can vary considerably over time, either globally or for each supplier.

Moreover, the composition of the industry gypsum depends on the process conditions of the industrial process of which it is a by-product. In many cases, indeed, industry gypsum of variable quality is being offered.

A number of types of industry gypsum is still being dumped as industrial waste.

Conventionally, gypsum building elements are produced via the wet method. This is based on calcined gypsum, more in particular plaster. The base raw material gypsum is first dehydrated in a calcining kiln. The plaster thus obtained is mixed with an ample excess of water to give a liquid slurry. This slurry is poured into a casting mould or onto a running belt functioning as such, where the slurry sets in a few minutes. The solid product obtained is dried under the action of heat. Hereinafter in the present text said production process is referred to as the "conventional wet process".

Optionally, the plaster slurry may be admixed with additives such as reinforcement fibres, weight-reducing fillers, colourants, accelerators or retardants and rheology regulators.

The use of plaster as a base material in the gypsum production has two major drawbacks.

A first drawback of the use of plaster as the basic material is chemical in nature. Depending on, on the one hand, the origin of the base gypsum and, on the other hand, the calcining conditions when said base gypsum is converted into plaster, the setting behaviour of the plaster and also the quality and the strength of the gypsum end product may vary.

The influence of the impurities present in the gypsum on the production process can be partially compensated, in the conventional wet process, by adjusting the calcination parameters, the particle size and the water/solids ratio in the plaster slurry. In the case of variable composition of the gypsum, considerable adjustments to the production process are therefore required, which leads to supplementary change-over costs.

The large-scale production of commercial gypsum products on the basis of mixtures of plasters obtained by calcination of different types of gypsum is difficult to achieve, owing to the mutual differences in the setting behaviour of said types.

A second drawback of the use of plaster as a base material is the energy consumption of the production process. Large amounts of energy are required to convert the basic raw material gypsum into plaster in calcining kilns. The process of preparing the plaster slurry moreover involves the addition of an ample excess of water (with respect to the stoichiometric amount required for setting). This excess of water must be removed, in a separate drying process, from the product formed, which requires additional time, space and energy.

To limit the energy consumption during drying and the time it takes, processes have been developed which involve the addition of only a small excess of water to the plaster. In the case of these "dry" processes, the moist plaster is pressed into the desired shape with the aid of compression-moulding.

Thus EP-A-0 184 551 describes an installation for the production of gypsum building boards according to the "dry method". This involves a mixture of plaster, a light filler and from 100 to 200 % of the stoichiometrically required amount of water for setting being pressed for about one minute.

The Swiss Patent CH-666 854 describes an installation for the production of perforated shapes by pressing, for an average of from 2 to 3 minutes, a mixture of pelletized plaster or anhydrite and the stoichiometrically required amount of water.

US-A-3 809 566 describes gypsum building elements obtained by diffusion, under pressure, of not more than the stoichiometrically required amount of water into plaster. A high-density product is obtained by pressing a mixture of plaster and a water-absorbing material saturated with water. The absorbed water is thus squeezed from the absorbent material and diffuses through the mixture, whereupon the plaster hydrates and sets. Possible water carriers for this process are perlite and expanded vermiculite.

According to the method described in NL-A-68 09 939 a hard solid mass is obtained by compressing, in a mould, a mixture of moist gypsum - more in particular phosphogypsum - and plaster. Here it is assumed that the quantity of free water present in the gypsum reacts, under the influence of the elevated pressure, with the plaster to form CaSO₄.2H₂O. Said CaSO₄.2H₂O then, together with the gypsum already present, forms a cohesive mass. Said mass can be used as agricultural gypsum and in the cement industry, or as acoustic panels or tiles. In the latter case the starting material preferably comprises mixtures of gypsum and plaster, with a weight ratio of approximately 1:1.

DE-A-28 05 523 describes a process in which gypsum building elements having good mechanical properties are obtained by the compression of a mixture of between 30 and 100% by weight of plaster, based on the dry mass of the mixture, and moist gypsum and/or water. The mixture contains an excess of water varying between 0 and 15 % of the stoichiometric amount required for the setting of the plaster. It is also envisaged that the moist gypsum can be replaced by any material which is able to provide, during the compression, the amount of water required for the setting of the plaster.

European Patent Application EP-A-0 150 859 describes a process and an installation for the production of tiles, panels and analogous flat construction materials by the compression of such a moist mixture of plaster powder and gypsum powder.

The methods described in NL-68 09 939, DE-A-28 05 523 and EP-A-0 150 859, which are based on a mixture of plaster and gypsum, still employ the base material plaster as a starting material to obtain a coherent building element. After all, the gypsum present in the mixture exists as a mineral filler in the compressed end product, retained by the gypsum matrix formed via the rehydration of the plaster powder.

NL-A-7 410 706 describes a number of processes wherein gypsum mouldings are produced by a moist mixture of gypsum of any origin and additions other than plaster being pressed, followed by the green mouldings thus obtained being dried at a sufficiently low humidity.

In NL-A-7 410 706 a distinction is drawn between two methods: on the one hand a wet pressing method, where the gypsum to be pressed contains approximately 30% by weight of free water and, on the other hand, a dry pressing method, where the gypsum to be pressed contains between 10 and 20% by weight of free water. Depending on the pressing method used, the amount of water released in the course of the mixture being pressed is larger or smaller.

To ensure that the mouldings obtained will have the breaking strength usually required for building elements, pressing preferably takes place at a pressure of at least 200 kg/cm².

However, NL-A-7 410 706 contains neither a clear specification nor a limitative enumeration of the additions present in the mixture. Those additions which are listed explicitly are, on the one hand, matrix-forming binders such as urea-formaldehyde resin and cement and, on the other hand, accelerators such as ground blast furnace slag, ammonium sulphate and hydrogen silicofluoride.

The green pressed shape obtained is a water-saturated or, in certain borderline cases, a quasi-water-saturated mass. The free moisture present in the green pressed shape is a gypsum-containing aqueous solution which, in a capillary or quasi-capillary funicular state moistens the gypsum crystals present. During the drying of the green moulding, gypsum crystals crystallize from the free moisture. Said gypsum crystals are deposited on the gypsum crystals already present and form a cement between the latter.

The additions are necessary in order to impart adequate stiffness to the green pressed shape and/or reduce the adhesion between the green pressed shape and the compression mould to such an extent that the green pressed shape can be unmoulded intact relatively easily. NL-7 410 706 therefore specifies that the concentration of the additions in the mixture to be pressed must be such that the dried moulding obtained still contains at least 1% by weight of said additions, based on the dry gypsum.

The present invention is based on the surprising finding that it is possible to press building elements from moist gypsum particle mixtures having a considerably lower moisture content than had been assumed until now.

The object of the invention is the production, in a simple and efficient manner, of gypsum building elements of good quality by means of gypsum being pressed.

The invention relates to a process for producing building elements made of gypsum, said process comprising the following steps: preparing a mixture containing a quantity of gypsum particles and a quantity of free water; feeding said mixture to a compression mould; compressing the mixture in the compression mould at a final pressure of between 20 and 60 MPa, a compressed mass being obtained in the process; and unmoulding the compressed mass; characterized in that: the quantity of free water in the mixture is essentially uniformly distributed and amounts to from 1 to 8% by weight, based on the dry solids of the mixture, and in that the step of the compressed mass being unmoulded is followed by the step of this compressed mass being allowed to set.

It should be noted in this context that the compressed mass is sufficiently solid, even before setting, to be manipulated, stored and transported. The setting of the compressed mass is a spontaneous hardening process, during which the Young modulus of the gypsum building element evolves towards a final value.

The mixture prepared according to said process may contain at least one of the following types of gypsum: natural gypsum, types of industry gypsum and waste gypsum. Preferably, this mixture contains between 4 and 100 % by weight of waste gypsum, based on the dry mass.

The mixture may, if desired, also contain at least one of the following components: pigments, colourants, moistureproof and water-repellent products, weight-reducing fillers, mineral fillers, plasticizers, fibres and other reinforcing materials.

Additionally, the mixture may also contain at least one accelerator.

For certain applications it may be beneficial for the step of feeding the mixture to the compression mould to comprise the following steps: feeding a first mixture to the compression mould so that a first layer is formed, followed by feeding the compression mould with a second mixture having a composition different from that of the first mixture, so that a second layer is formed. If desired, this can be followed by the compression mould being fed with a third mixture having a composition different from that of the second mixture, so that a third layer is formed.

In a specific embodiment of the process according to the invention, the mixture is compressed at a final pressure of between 20 and 49 MPa.

In the course of this process, according to a particular procedure, during the step of the mixture being compressed in the compression mould, the final pressure is maintained for between 0 and 120 seconds.

During the step of the preparation of the mixture the gypsum waste produced by said process is preferably added to the mixture.

According to a particular procedure, the setting takes place at room temperature and at a relative humidity of between 75 % and 100 %. The step of allowing the compressed mass to set may, for example, take from ½ to 7 days.

According to a specific procedure, the building element is pressed in at least two parts, the step of allowing the compressed mass to set being followed by the step of said parts being cemented. According to one alternative procedure, the step of the compressed mass being allowed to set is preceded by the step of said parts being cemented. The cementing of said parts preferably takes place with the aid of plaster cement, but it may also occur with the aid of other adhesives such as, for example, organic cement, phosphate cement and silicate cement.

If desired, the building element obtained may be milled or sawn into the desired shape.

In specific cases it may be useful for a relief to be applied to at least one external surface of the building element.

According to a possible embodiment, at least one external surface of the building element is treated with a moistureproof or water-repellent product.

The invention also relates to a building element consisting of compressed gypsum, fabricated by means of the above-described process.

In particular, the invention relates to such gypsum building elements, the building element containing between 4 and 100% by weight of waste gypsum.

According to one embodiment, the compressed gypsum additionally contains at least one of the following types of gypsum: natural gypsum, types of industry gypsum or a mixture of said types of gypsum.

The compressed gypsum may also contain at least one of the following additives: pigments, colourants, moistureproof andwater-repellent products, weight-reducing fillers, mineral fillers, plasticizers, fibres and other reinforcing materials.

According to a particular embodiment of the building element, the compressed gypsum is composed of at least two layers of different composition.

The compressed gypsum preferably has a density of between 1.3 and 1.9 g/cm³.

A preferred embodiment of the building element is a modular building element. The modular building element may be a gypsum block, a ceiling tile or a raised-floor tile.

According to a particular embodiment, the building element is an essentially slab-shaped building element provided with a front and rear side and four side faces, two adjoining side faces being provided with a tongue, parallel to the front and rear side of the building element, and the other two side faces being provided with a groove, parallel to the front and rear side of the building element, the dimensions of the tongues being chosen in such a way that the tongues in the side faces of a first building element fit into the grooves in the side faces of a second analogous building element.

According to an advantageous embodiment, the building element may be provided with at least one cavity.

The building element may be composed of at least two separate parts, each part touching at least one other part via at least one contact surface. More in particular, the building element may be composed of two parts which touch each other according to one or more contact surfaces situated in one plane and which are essentially symmetrical with respect to the plane passing through said contact surface(s). In this case, the building element may contain at least one cavity which is formed by recesses in the two parts, said recesses being surrounded, in part or in their entirety, by a contact surface between the two parts. A particular embodiment thereof is a building element which contains one cavity, completely enclosed by the building element, the cavity being formed by recesses in the two parts, said recesses being surrounded, in their entirety, by a contact surface between the two parts and there being provided, within said internal cavity, at least one internal contact surface between the two parts.

If the building element is composed of a plurality of parts, the parts of the building element will preferably have been cemented together via one or more contact surfaces between said parts. The parts of the building element are preferably cemented together with the aid of plaster cement.

If desired, at least one external surface of the building element may be provided with a decorative relief.

At the same time, at least one external surface of the building element may have been treated with a moistureproof or water-repellent product.

Producing gypsum building elements according to the process which forms part of the present invention has many advantages.

Since the process according to the invention no longer requires the base gypsum to be calcined and, in addition, the building element formed need not be dried, the process according to the invention has, as its main advantage, a considerably lower energy consumption with respect to known processes wherein gypsum building elements are produced via hydration of plaster to gypsum. In the case of the method of production according to the invention the total energy consumption, in other words all the energy consumed between the stage of the basic raw material gypsum and the ready-to-use building element, is only from 30 to 50% of the total energy consumption of the production process according to the conventional wet method.

Suitable basic raw materials for the production of gypsum building elements in the process according to the invention include natural gypsum, types of industry gypsum, as well as waste gypsum. Mixtures of different types of gypsum can likewise be processed without any problems. Table 1 illustrates the effect of the various types of gypsum on the properties of the gypsum building elements. The moisture content of the mixture was 4.5 % by weight, based on the dry mass, and pressing took place at a final pressure of 45 MPa. Setting took place at 20°C and a relative humidity of 80 %, for 7 days.

**TABLE 1**

| Type of gypsum | Flexural strength [MPa] | Young's modulus [GPa] | Density[g/cm³] |
|---|---|---|---|
| Flue gas desulphurization gypsum | 1.72 | 9.83 | 1.82 |
| Phosphogypsum | 3.28 | 13.70 | 1.84 |
| Ground waste gypsum (without fibres) | 2.16 | 9.20 | 1.58 |
| Ground gypsum wallboard | 1.73 | 9.10 | 1.51 |

Owing to the limited size and the relatively low investment costs of the production line for the process according to the invention it is also possible for such a production line for the production of gypsum building elements to be located near relatively small sources of gypsum. As a result, ancillary transport costs are avoided. Moreover, inter alia owing to the absence of a calcining kiln, the costs in the case of production disruption, for example due to the gypsum supply being interrupted, are much lower than in the case of production of gypsum building elements via the hydration of plaster. Such an interruption in the gypsum supply may take place, for example, when a producer of industry gypsum shuts down his installations for maintenance purposes.

An additional advantage of the process according to the invention compared to the production of gypsum building elements by the hydration of plaster resides in the fact that the base gypsum is subject to little or no ageing, in contrast to plaster, whose reactivity with respect to rehydration to give gypsum drops as a function of time. After calcination, processing of the plaster to produce gypsum must therefore take place within a limited time. The base gypsum which serves as the raw material for the process according to the invention can be stored, in contrast, for a prolonged period without the properties of the base gypsum being affected thereby.

No use is made, in the process according to the invention, of setting mixtures. The mixture of gypsum, free water, possible additions and additives forming the starting material in the process described herein can be stored and transported for prolonged periods without its consistency changing. A disruption in the production process therefore does not lead to inconvenient solid deposits in the equipment.

A particular advantage of the process according to the invention is that any gypsum waste produced when this process is employed can immediately be recycled. Remainders of the mixture, broken or imperfect building elements and other gypsum-containing production waste may, possibly after size reduction, be added directly to the mixture. This makes the process according to the invention a particularly environment-friendly production process.

An advantage of the process according to the invention is that it can be carried out with already existing equipment, more in particular mixing and pressing equipment. With respect to the previously known processes, which involve the pressing of moist gypsum mixtures to produce building elements, the method according to the invention has the major advantage that no water is released during pressing. The compression moulds employed therefore need not be provided with a means for discharging water. Compression presses and compression moulds developed for pressing ceramic and metal powders are eminently suitable for the method of production according to the invention.

The same equipment can be employed for gypsum mixtures of different composition. Since in the case of change-over from one gypsum mixture to a gypsum mixture of a different composition the only factors to be adjusted are, possibly, the moisture content of the mixture, the compression pressure and/or the compression time, this does not lead to major change-over costs. The process according to the invention thus exhibits high flexibility with respect to the kind of raw material. This process permits cost-effective processing, into building elements, of types of gypsum which occur less frequently and which until now have often been dumped as waste. This is therefore another manner in which the process according to the invention contributes to better protection of the environment.

With respect to the existing methods for pressing moist gypsum mixtures to produce gypsum building elements, the process according to the invention has the major advantage that even without the gypsum mixture containing accelerators or matrix-forming binders, the pressed shape, even before the step of being allowed to set, is sufficiently strong to be handled, stored and transported.

The initial strength of the pressed shape and its low affinity for the walls of the compression mould has the advantageous consequence that unmoulding of the compressed mass can take place rapidly and effectively, without significant deformation of the compressed mass occurring in the process. It is not necessary, in this case, for the walls of the compression mould, which come into contact with the gypsum mixture to be pressed, to be provided with a non-stick layer. Thus it is possible, by means of the process according to the invention, even if the gypsum mixture does not contain any accelerators or matrix-forming binders, for building elements to be produced in a simple manner, whose deviations between their mutual dimensions are no larger than the deviations in shape usual for gypsum building elements.

If the building element according to the invention comprises pressed gypsum which contains at least 4 % by weight of waste gypsum, based on the dry mass of the mixture, the same mechanical strength is measured, relative to an analogous building element which contains no waste gypsum, at a lower density. Thus a building element consisting of pressed waste gypsum has the same stiffness as a building element consisting of pressed flue gas desulphurization gypsum, at a density which is lower by from 15 % to 20 %.

If the gypsum building element according to the invention moreover contains one or more cavities, the building element, at the same external volume, has a lower weight, which reduces the workload during construction.

An important advantageous property of gypsum building elements resides in general in the fact that gypsum is non-flammable. Building elements which consist solely of gypsum do not, in the case of fire, make any contribution to the propagation of fire, and they produce little smoke. Walls composed of such gypsum building elements are thus suitable for use as internal partition construction in spaces which have an escape route passing through them. If the gypsum building element contains other constituents, in addition to gypsum, or if the gypsum building element has been treated with a moistureproof or water-repellent product, constituents and/or products are preferably chosen which are themselves non-flammable and which produce little or no smoke when heated. For the sake of fire safety, the constituent parts, in the case of the gypsum building element comprising two or a plurality of parts, are preferably cemented together by means of plaster cement.

A specific embodiment of the building element according to the invention is described in more detail with reference to Figures 1, 2 and 3.

Figure 1 is a front view of a specific embodiment of the building element according to the invention, namely a modular, essentially slab-shaped building element.

Figure 2 is a horizontal cross-section of the building element of Figure 1 on II-II.

Figure 3 is a vertical cross-section of the building element of Figure 1 on III-III.

The essentially slab-shaped building element has a plan parallel rectangular front (1) and rear side (2) and four side faces (3,4,5,6,), parallel two by two. Two adjoining side faces (3,4) are provided with a central tongue (7) parallel to the front (1) and rear side (2) of the building element. The two remaining side faces (5,6) are provided with a corresponding central groove (8).

The modular building element is composed of two separately pressed symmetrical parts (9,10). In the building element, said parts (9,10) touch one another along the edge (11) of the plane of symmetry X-X between the front (9) and rear side (10). Within said edge (11), the thickness of the constituent parts (9,10) is less than half the thickness of the building element, except in a zone (12) in the centre of the constituent parts (9,10), where the thickness of the constituent parts (9,10) is again half the thickness of the building element. The two constituent parts (9,10) are cemented together along the edge (11) of the plane of symmetry X-X as well as in the central zone (12). Thus a modular building element is formed, provided with a central cavity and an internal contact surface between the constituent parts (9,10). Pressing of the constituent parts (9,10) is preferably carried out in the direction perpendicular to the front (1) and rear side (2) of the building element. The constituent parts (9,10) may immediately be pressed into the desired shape as a result of corresponding compression moulds being used. The constituent parts (9,10) may, however, also be pressed in the shape of simple blocks which, after pressing, are provided with the correct profile by, for example, milling. The cementing of the constituent parts may take place before or after said parts have set. Such a building element is eminently suitable for the construction of non-load-bearing acoustic walls.

The particle size of the gypsum particles used in preparing the mixture can vary greatly. The process according to the invention involves the use, in particular, of gypsum particles having a particle size between 1 and 400 microns. In general, the Young modulus of the gypsum building element obtained increases with decreasing particle size of the gypsum particles in the mixture. The concomitant increase in the density of the building element is exceedingly small. The effect of the particle size of the gypsum particles on the properties of the building element is illustrated in Table 2. The type of gypsum used was flue gas desulphurization gypsum. The moisture content of the gypsum mixture was 4.5 % by weight, and the final pressure was 45 MPa. Setting of the building elements proceeded for 7 days at a relative humidity of 80 % and a temperature of 20°C.

**TABLE 2**

| Blaine number [cm²/g] | d₁₀; d₅₀; d₉₀ [µm] | Young's modulus (after 7 days) [GPa] | Density [g/cm³] |
|---|---|---|---|
| 800 | 12.96;53.13;223.60 | 9.83 | 1.82 |
| 1500 | 13.10;52.10;116.10 | 11.6 | 1.83 |
| 2200 | 12.10;53.20;102.00 | 12.8 | 1.84 |
| 2800 | 11.42;41.96;58.19 | 13.2 | 1.84 |

It is therefore possible, by grinding or crushing the gypsum particles, to improve the mechanical properties of the gypsum building element. This is the case, more in particular, for natural gypsum and industry gypsum. In the case of waste gypsum this effect is considerably smaller.

As has already been mentioned previously, a mixture containing at least 4 % by weight of waste gypsum, based on the dry mass of the mixture will result in building elements having the same mechanical strength at lower density of the compressed gypsum than building elements manufactured from an analogous mixture without waste gypsum.

The moisture content of the mixture, the final pressure and the holding time for which said final pressure is maintained may vary as a function of the composition of the gypsum mixture and the desired physical properties of the building element, as illustrated in Table 3. Setting took place in the same manner as described for Tables 1 and 2.

**Table 3**

| Moisture content of the mixture [% by weight] | Final pressure [MPa] | Holding time[s] | Flexural strength [MPa] | Young's modulus [GPa] | Density [g/cm³] |
|---|---|---|---|---|---|
| 1.50 | 54 | 25 | / | 71.0 | 1.85 |
| 1.50 | 36 | 85 | 0.6 | 62.5 | 1.85 |
| 1.50 | 54 | 85 | / | 71.3 | 1.86 |
| 4.00 | 36 | 25 | 0.9 | 68.6 | 1.79 |
| 4.00 | 54 | 25 | / | 75.1 | 1.85 |
| 4.00 | 36 | 85 | / | 70.7 | 1.82 |
| 4.00 | 54 | 85 | / | 75.9 | 1.89 |
| 2.75 | 45 | 60 | 1.2 | 59.4 | 1.85 |
| 2.75 | 30 | 60 | / | 52.5 | 1.74 |

It goes without saying that within the scope of the present invention the free water in the mixture can also be present in the form of water-absorbing material saturated with water, said free water being released from said water-absorbing material during pressing.

If light building elements are being aimed for, weight-reducing fillers can be added such as, for example, exfoliated vermiculite, expanded clay, glass beads and wood particles.

Possible mineral fillers include marl and chalk.

In order to limit thermal shrinkage it is possible for the mixture to be admixed with, for example, clay, fly ash or calcium silicates.

One of the drawbacks involved in the use of gypsum building elements is the moisture sensitivity of gypsum blocks. In order to remedy this shortcoming, moistureproof or water-repellent products such as silicone preparations can be added to the mixture. The addition of approximately 0.5 % by weight of silicone oil, based on the dry mass of the mixture, had no effect whatsoever on the pressing behaviour and made the building blocks sufficiently waterproof. The addition of moistureproof or water-repellent products to the mixture to be pressed, and/or the treatment of at least one external surface of the building element with a moistureproof or water-repellent product is indicated particularly in those cases where the building element obtained contains not only gypsum, but also water-absorbing substances.

The initial stiffness and strength of the compressed mass can be increased by the addition of a limited quantity of accelerator to the mixture. Accelerators which are more particularly eligible for the process according to the invention are those which are used in the conventional wet process. Possible accelerators are (NH₄)₂SO₄ and K₂SO₄. An analogous increase in the initial stiffness and strength of the compressed mass is achieved by admixing the mixture with a small amount (from 1 to 10 % by weight, based on the dry mass of the mixture, and preferably from 2 to 5 % by weight) of plaster as an accelerator. This has the important advantage that the unmoulding of large compressed masses or of compressed masses of somewhat problematic shape takes place more readily. It should also be noted that compressed waste gypsum likewise exhibits a higher initial stiffness and strength.

This is illustrated with reference to Table 4. In this case the gypsum mixture contained 1.5 % by weight of free water, based on the dry mass, and pressing took place at a final pressure of 45 MPa.

**TABLE 4**

| Type of gypsum | Accelerator | Young's modulus after 1 minute [GPa] | Young's modulus after 7 days [GPa] | Density [g/cm³] |
|---|---|---|---|---|
| Flue gas desulphurization gypsum | / | 3.02 | 9.83 | 1.82 |
| Flue gas desulphurization gypsum | 0.5 % by weight of (NH₄)₂SO₄ | 4.89 | 14.3 | 1.84 |
| Flue gas desulphurization gypsum | 5 % by weight of plaster | 4.83 | 8.92 | 1.79 |
| Ground gypsum waste | / | 5.27 | 8.79 | 1.73 |

If the accelerator has a high solubility in water, such as, for example, the readily soluble salts (NH₄)₂SO₄ and K₂SO₄, the accelerator is preferably dissolved in water before being added to the mixture. If the accelerator, on the other hand, is sparingly soluble in water or, like plaster, is hydrated in water to give a less soluble product, the accelerator is preferably added to the mixture in dry form. The quantity of water required for the process according to the invention is, in said latter case, added to the mixture preferably shortly before or during the step of adding the mixture to the compression mould.

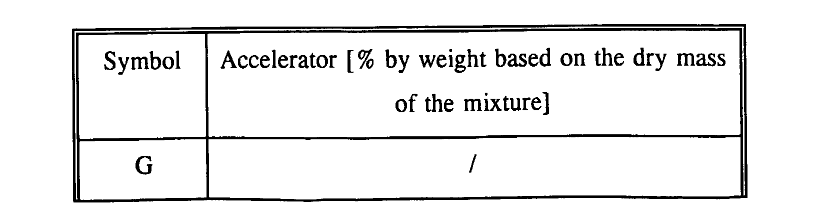

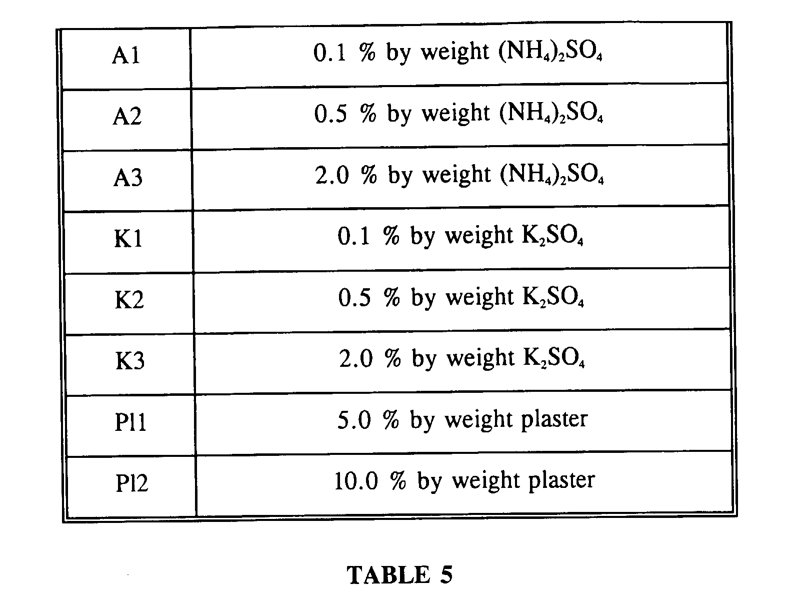

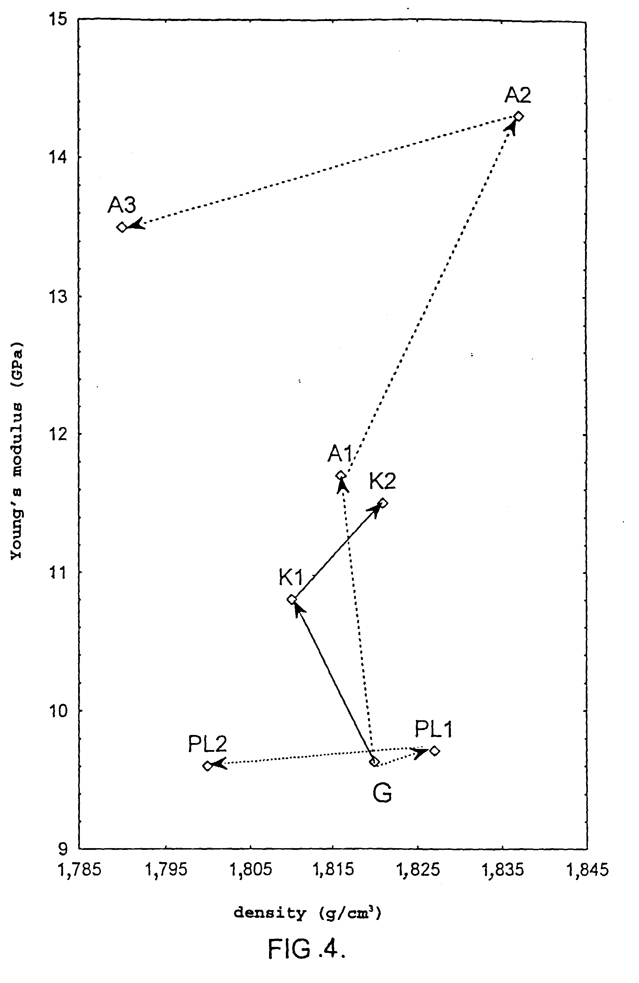

It is also striking that if the mixture is admixed with from 0.1 to 0.5 % by weight of K₂SO₄ or preferably from 0.1 to 2 % by weight of (NH₄)₂SO₄ (based on the dry mass of the mixture), the final building element likewise exhibits higher stiffness and strength. In contrast thereto, if the mixture was admixed with the above-reported quantities of plaster as an accelerator, no such improvement in the mechanical properties of the final building element was observed. This is illustrated with the aid of Figure 4.

Figure 4 represents the effect of accelerators on the density and the Young modulus of the gypsum building element. The mixture comprising flue gas desulphurization gypsum, optionally an accelerator and 4.5 % by weight of free water, based on the dry mass of the mixture, was compressed at a final pressure of 45 MPa. It then set for 7 days in a room atmosphere. The composition of the respective mixtures and the symbols employed in Figure 4 are explained in Table 5.

A particular characteristic of the process according to the invention is that said process enables the production, in a simple manner, of gypsum building elements which are composed of a plurality of layers where, without the use of adhesives or other adhesion promoters, an excellent bond exists between said layers. To this end, different gypsum mixtures are added, one after the other, in successive layers, to the compression mould, whereupon the whole is pressed in one go. Such a procedure is employed, inter alia, in the production of gypsum building elements comprising layers of different colour. Another useful field of application of this procedure is the production of gypsum building elements having a core consisting of gypsum derived from ground gypsum wallboard, which nevertheless exhibit a uniform and/or purely white surface. An analogous application is the gypsum building element having a uniform and/or pure white surface, where the core contains weight-reducing fillers.

The process according to the invention permits the production of gypsum building elements in a rapid and efficient manner. It is perfectly possible to work with a pressing cycle of 10 seconds.

During the step of allowing the compressed mass to set heat need not be supplied. If desired, it is possible, however, to raise the temperature in order to accelerate the setting process. As a result of, for example, carrying out the step of allowing the compressed mass to set at a temperature of 40°C, the building element is ready for use after setting for as little as half a day. The temperature at which setting takes place does not, however, have any measurable effect on the product properties of the final building element. It should further be noted that the step of allowing the compressed mass to set can be carried out at room temperature and in an atmosphere having a relative humidity of 100%.

If the gypsum building element is pressed as a plurality of parts, said parts are preferably cemented together by means of plaster cement. Said cementing proceeds without difficulties, and the bond thus obtained between the parts is excellent.

An additional advantage of the gypsum building elements produced via the process according to the invention resides in the fact that they exhibit a smoother surface than conventional gypsum elements cast from plaster slurry. This has the practical advantage that said gypsum building elements are less dusting than the conventional elements.

By pressing gypsum according to the process described herein it is possible to provide gypsum building elements of various, more or less simple shapes. For other building elements, having more complex shapes or reliefs, it is often not possible to design corresponding simple compression moulds. The gypsum building elements obtained by the process according to the invention can, however, be sawn or milled without difficulty. Therefore it is also possible to give gypsum building elements according to the invention the desired shape and/or the desired relief by sawing and/or milling.

Gypsum building elements obtained via the process according to the invention are compared with building elements obtained via the conventional wet method. More in particular, heavy building blocks for sound insulation are compared with one another. Such gypsum blocks are mainly used in non-load-bearing walls; they are cemented together to give internal partition constructions.

The conventional wet-process gypsum blocks with which the gypsum blocks according to the invention are compared are massive standard acoustic blocks having a thickness of 70 mm.

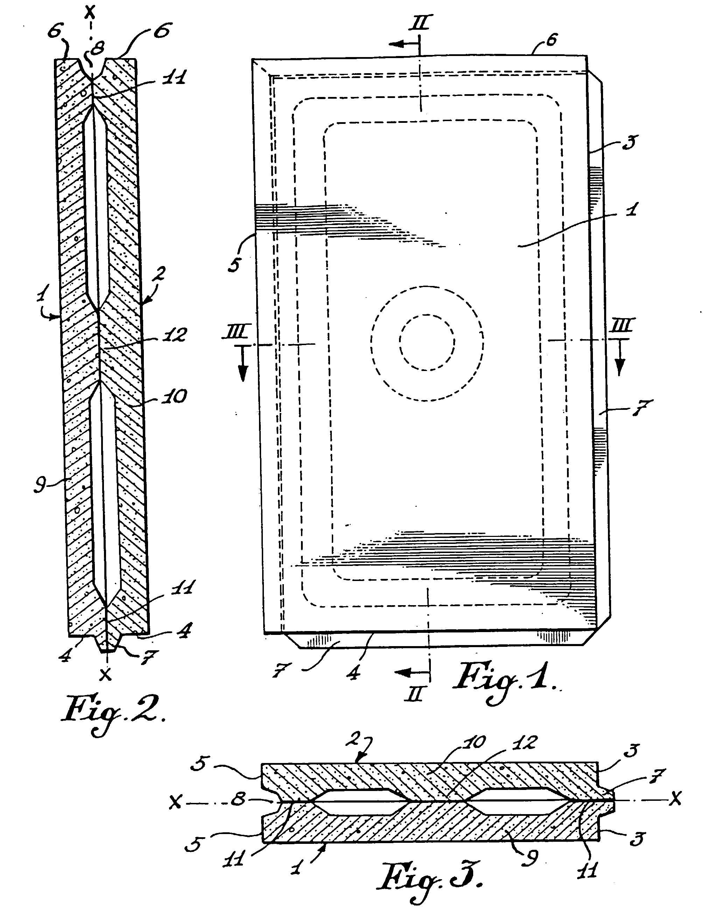

The gypsum blocks according to the invention were obtained by compressing, at a final pressure of 35 MPa, a mixture containing 80 % by weight of flue gas desulphurization gypsum having a Blaine number of 800 cm²/g, 20 % by weight of ground waste gypsum stemming from gypsum blocks, having a d₅₀ grain diameter of 1 mm, and 4 % by weight of free water (all the percentages by weight reported here are based on the dry mass of the mixture). The gypsum blocks according to the invention were gypsum blocks of the shape described in Figures 1 to 3. The total thickness of the gypsum blocks according to the invention likewise was 70 mm.

**TABLE 6**

| | Conventional gypsym blocks | Gypsum blocks according to the invention |
|---|---|---|
| Type | solid | hollow, consisting of 2 parts cemented together |
| Compression strength | 5 N/mm² | 20 N/mm² |
| Flexural/tensile strength | 1.1 N/mm² | 1.5 N/mm² |
| Density | 1.25 g/cm³ | 1.45 g/cm³ |
| Surface | smooth with air bubbles | smooth |

As part of the comparative test two types of walls were built, viz., on the one hand, walls composed of the conventional gypsum blocks and, on the other hand, walls composed of the gypsum blocks according to the invention. All these gypsum block walls were produced by the respective gypsum blocks being cemented together with the aid of ordinary plaster cement. The characteristics of these walls were likewise compared with one another.

The results of the comparative test, carried out according to the Dutch Standard NEN 5077, are represented in Table 6.

The gypsum blocks according to the invention are suitable for building non-load-bearing acoustic walls. They have a higher mechanical resistance than the conventional gypsum blocks, both with respect to the compression strength and to the flexural/tensile strength. The gypsum block wall composed of gypsum blocks according to the invention moreover exhibits a sound-proofing effect (measured according to the Dutch standard NEN 5077) analogous to the conventional non-load-bearing acoustic gypsum block wall.

## Claims

1. Process for producing building elements made of gypsum, said process comprising the following steps:
- preparing a mixture containing a quantity of gypsum particles and a quantity of free water;
- feeding said mixture to a compression mould;
- compressing the mixture in the compression mould at a final pressure of between 20 and 60 MPa, a compressed mass being obtained in the process;
- unmoulding the compressed mass; characterized in that:
- the quantity of free water in the mixture is essentially uniformly distributed and amounts to from 1 to 8% by weight, based on the dry solids of the mixture, and
- in that the step of the compressed mass being unmoulded is followed by the step of the compressed mass being allowed to set.

2. Process according to Claim 1, characterized in that the mixture contains a type of gypsum selected from the group comprising natural gypsum, types of industry gypsum, waste gypsum and mixtures of said types of gypsum.

3. Process according to any one of Claims 1 and 2, characterized in that the mixture contains from 4 % to 100 % by weight of waste gypsum, based on the dry mass.

4. Process according to any one of Claims 1 to 3, characterized in that the mixture contains a component selected from the group comprising pigments, colourants, moistureproof and water-repellent products, weight-reducing fillers, mineral fillers, plasticizers, fibres, other reinforcing materials and mixtures of said components.

5. Process according to any one of Claims 1 to 4, characterized in that the mixture contains one or more accelerators.

6. Process according to any one of Claims 1 to 5, characterized in that the step of feeding the mixture to the compression mould comprises the following steps:
- feeding a first mixture to the compression mould so that a first layer is formed;
- feeding the compression mould with a second mixture having a composition different from that of the first mixture, so that a second layer is formed.

7. Process according to Claim 6, characterized in that the step of feeding the compression mould with the second mixture is followed by the compression mould being fed with a third mixture having a composition different from that of the second mixture, so that a third layer is formed.

8. Process according to any one of Claims 1 to 7, characterized in that the final pressure, in the step of compressing the mixture, is between 20 and 49 MPa.

9. Process according to any one of Claims 1 to 8, characterized in that, in the step of the mixture being compressed in the compression mould, the final pressure is maintained for between 0 and 120 seconds.

10. Process according to any one of Claims 1 to 9, characterized in that, in the step of the mixture being prepared, gypsum waste produced by the process is added to the mixture.

11. Process according to any one of Claims 1 to 10, characterized in that the step of allowing the compressed mass to set takes place at room temperature and at a relative humidity of between 75 % and 100 %.

12. Process according to any one of Claims 1 to 11, characterized in that the building element is pressed in at least two parts (9,10) and in that said parts (9,10) are cemented together after the step of allowing the compressed mass to set.

13. Process according to any one of Claims 1 to 11, characterized in that the building element is pressed in at least two parts (9,10) and in that said parts (9,10) are cemented together before the step of allowing the compressed mass to set.

14. Process according to any one of Claims 12 and 13, characterized in that the cementing of the parts (9,10) takes place with the aid of plaster cement.

15. Process according to any one of Claims 1 to 14, characterized in that the building element is milled or sawn into the desired shape.

16. Process according to any one of Claims 1 to 15, characterized in that a relief is applied to at least one external surface of the building element.

17. Building element made of compressed gypsum, obtained by the method according to any one of Claims 1 to 16, characterized in that it contains from 4 to 100% by weight of waste gypsum.

18. Building element according to Claim 17, characterized in that it also contains a type of gypsum selected from the group comprising natural gypsum, types of industry gypsum and mixtures of said types of gypsum.

19. Building element according to any one of Claims 17 and 18, characterized in that it likewise contains at least one additive selected from the group comprising pigments, colourants, moistureproof and water-repellent products, weight-reducing fillers, mineral fillers, plasticizers, fibres, other reinforcing materials and mixtures of said additives.

20. Building element according to any one of Claims 17 to 19, characterized in that the compressed gypsum is composed of at least two layers of different composition.

21. Building element according to any one of Claims 17 to 20, characterized in that the compressed gypsum has a density of between 1.3 and 1.9 g/cm³.

22. Building element according to any one of Claims 17 to 21, characterized in that it is a modular building element selected from the group comprising gypsum blocks, ceiling tiles and raised-floor tiles.

23. Building element according to any one of Claims 17 to 22, characterized in that it is an essentially slab-shaped building element provided with a front (1) and rear side (2) and four side faces (3,4,5,6), two adjoining side faces (3, 4) being provided with a tongue (7), parallel to the front (1) and rear side (2) of the building element, and the other two side faces (5,6) being provided with a groove (8), parallel to the front (1) and rear side (2) of the building element, the dimensions of the tongues (7) being chosen in such a way that the tongues (7) in the side faces (3,4) of a first building element fit into the grooves (8) in the side faces (5,6) of a second analogous building element.

24. Building element according to any one of Claims 17 to 23, characterized in that the building element is provided with at least one cavity.

25. Building element according to any one of Claims 17 to 24, characterized in that it is composed of at least two separate parts (9,10), each part (9,10) touching at least one other part (10,9) via at least one contact surface (11).

26. Building element according to Claim 25, characterized in that the building element is composed of two parts (9,10) which touch each other according to one or more contact surfaces (11) situated in one plane and which are essentially symmetrical with respect to the plane passing through said contact surface(s) (11).

27. Building element according to Claim 26, characterized in that it contains at least one cavity which is formed by recesses in the two parts (9,10), said recesses being surrounded, in part or in their entirety, by a contact surface (11) between the two parts (9,10).

28. Building element according to Claim 27, characterized in that it contains one cavity, completely enclosed by the building element, the cavity being formed by recesses in the two parts (9,10), said recesses being surrounded, in their entirety, by a contact surface (11) between the two parts (9,10) and there being provided, within said cavity, at least one internal contact surface between the two parts (9,10).

29. Building element according to any one of Claims 25 to 28, characterized in that the parts (9,10) of the building element have been cemented together via one or more contact surfaces (11) between said parts (9,10).

30. Building element according to Claim 29, characterized in that the parts (9,10) of the building element have been cemented together with the aid of plaster cement.

31. Building element according to any one of Claims 17 to 30, characterized in that at least one external surface has been provided with a decorative relief.
